# EUROPEAN PATENT SPECIFICATION

(11) **EP 3 359 866 B1**
(45) Date of publication and mention of the grant of the patent: **29.04.2020**
(21) Application number: 16854580.4
(22) Date of filing: 09.12.2016
(51) Int. Cl.: F16N 7/02, B67D 7/04, A47F 1/00, B67D 7/84, F16N 37/00, F16N 35/00

(54) **LUBRICANT DISPENSING SYSTEM**
SCHMIERMITTELAUSGABESYSTEM
SYSTÈME DE DISTRIBUTION DE LUBRIFIANT

(30) Priority: 26.07.2016 US 201615219488
(43) Date of publication of application: 15.08.2018
(73) Proprietor: Valvoline Licensing and Intellectual Property, LLC, Lexington, KY 40509 (US)
(72) Inventor: KASPER, Joseph, Lexington, Kentucky 40502 (US); RUBLE, Steven, Lexington, Kentucky 40515 (US); PESHKE, Keith, Lexington, Kentucky 40515 (US); GANDY, Mark, Brooklyn, New York 11201 (US); SHOOK, Phillilp, Brooklyn, New York 11201 (US)
(74) Representative: Locas, Davide
(86) International application number: PCT/US2016/065735
(87) International publication number: WO 2017/063002

(56) References cited:
- BE-A- 456 536
- DE-U1- 9 211 799
- GB-A- 590 256
- US-A- 862 999
- US-A- 862 999
- US-A- 2 134 865
- US-A- 2 162 625
- US-A- 2 162 625
- US-A- 3 117 695
- US-A- 5 597 097
- US-A1- 2008 000 863
- US-A1- 2011 278 324
- US-A1- 2012 325 852
- US-A1- 2014 166 697
- US-A1- 2015 075 964

## Description

### CROSS REFERENCE TO RELATED APPLICATIONS

### TECHNICAL FIELD

The system of the present application relates generally to dispensing systems. More specifically, the device of the present application relates to a configurable liquid dispensing system. Known dispensing systems are disclosed in GB 590 256 A, US 2 162 625 A1, US 2 134 865 A1, BE 456 536 A and US 862 999 A1.

### SUMMARY

The present invention relates to a modular lubricant storage and dispensing system as in appended claim 1.

The present application discloses a lubricant bag box dispensing system which utilizes a lubricant bag having an integrated spigot at its base. The lubricant bag is housed within a chamfered bag housing having a spigot port through which the lubricant bag's spigot passes. The bag housing further possesses a vertical sight and hand ports which are used as handles.

An ergonomic lubricant dispensing jug is also disclosed. The jug possesses a wide base to lower the center of gravity and lubricant fill port at the rear of the jug. A fill port containment wall extends vertically from the boundary of the fill port and acts to further minimize the chance for spillage and splashing. A removably attached funnel is nested on the jug spout and may be stored internally with the neck of the funnel acting as a stop which prevents the funnel from falling into the jug.

A modular rack system is disclosed that houses the lubricant bag box above the ergonomic lubricant dispensing jug. The modular rack system also serves to align the spout of the lubricant bag box above the lubricant dispensing jug's fill port for spill free filling.

### RECTIFICATION OF THE SPECIFICATION

### CLEAN VERSION

FIG. 1 depicts a front-left perspective view_of the lubricant bay box system assembly.
FIG. 2 depicts an overhead-front-left perspective view of a modular rack system.

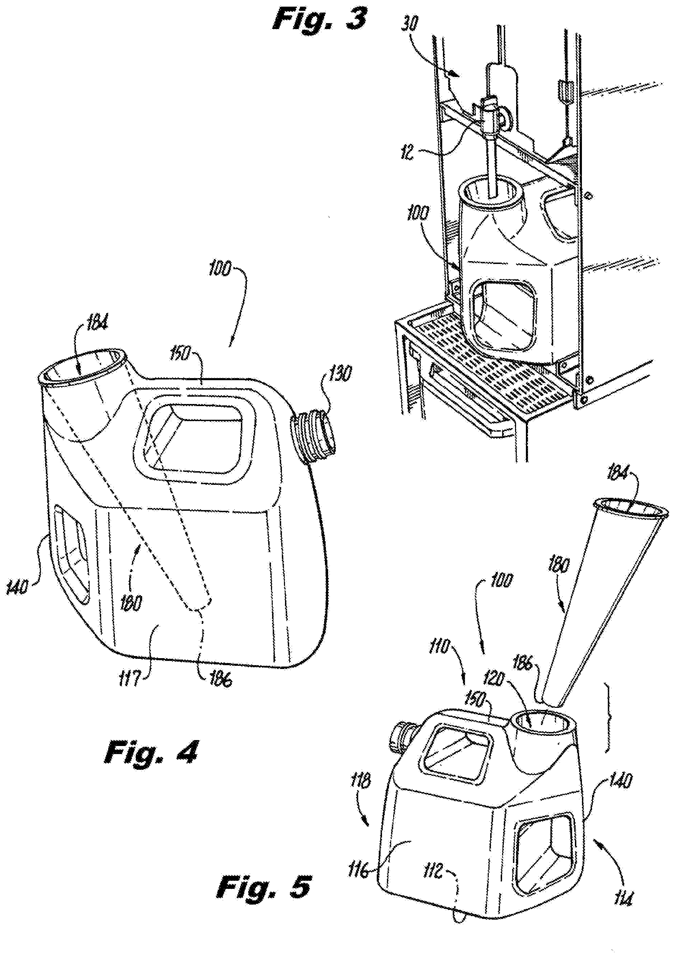

FIG. 3 depicts a front-right partial perspective view of a modular rack system in use while filling a lubricant dispensing jug.
FIG. 4 depicts a right-side perspective view of an ergonomic lubricant jug and stored funnel.
FIG. 5 depicts an exploded left-side perspective view of an ergonomic lubricant jug and funnel.

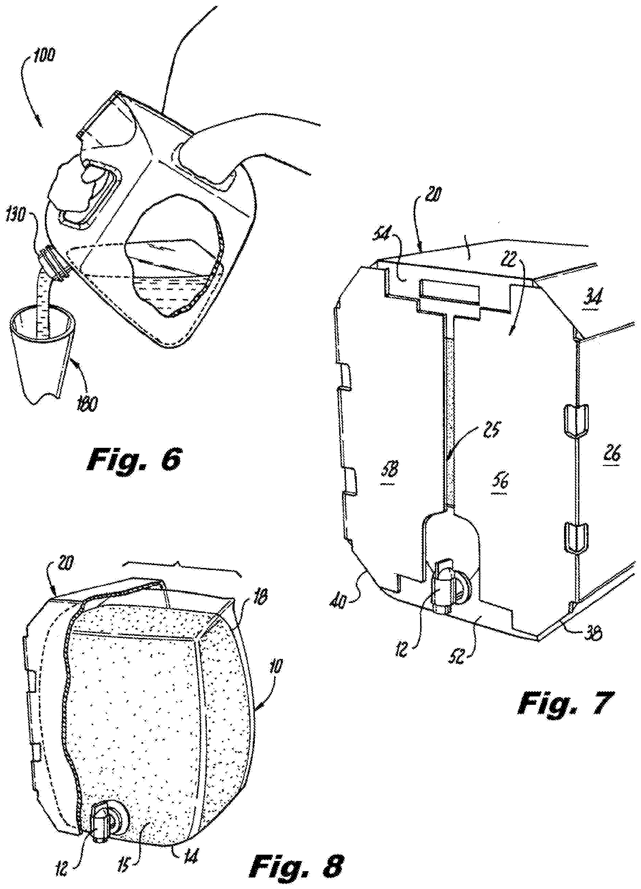

FIG. 6 depicts a left-side perspective view of a lubricant filled ergonomic lubricant jug in use with a and funnel.
FIG. 7 depicts a partial-front-right perspective view of a bag box with an internally stored a lubricant filled bag.
FIG. 8 depicts a front-right perspective cutaway view of a bag box with an internally stored lubricant filled bag.

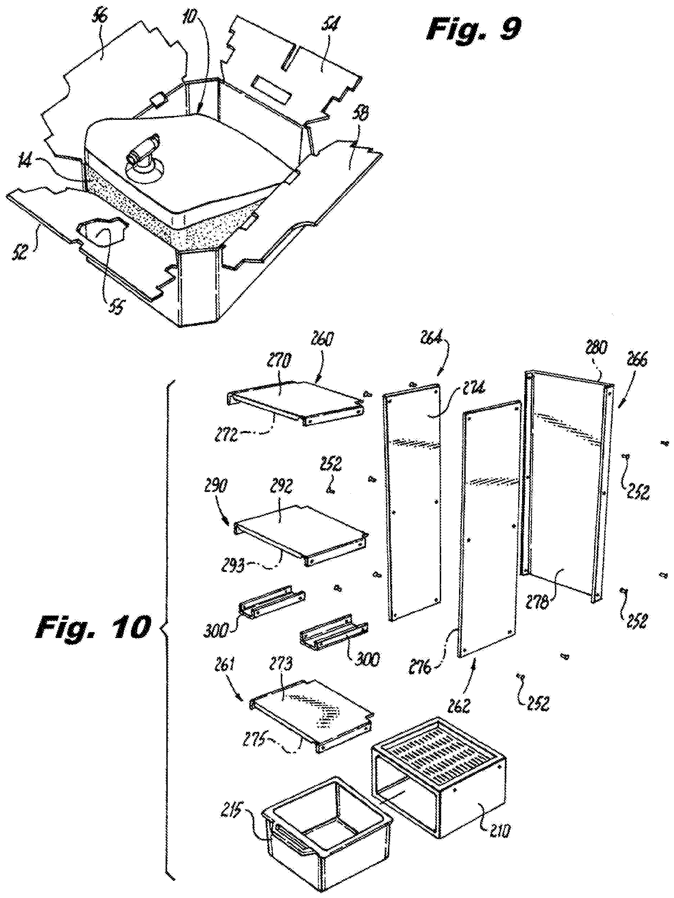

FIG. 9 depicts a perspective view of a partially assembled bag box and lubricant bag.
FIG. 10 depicts an exploded front-right perspective view of a shelving module and drain pan module.

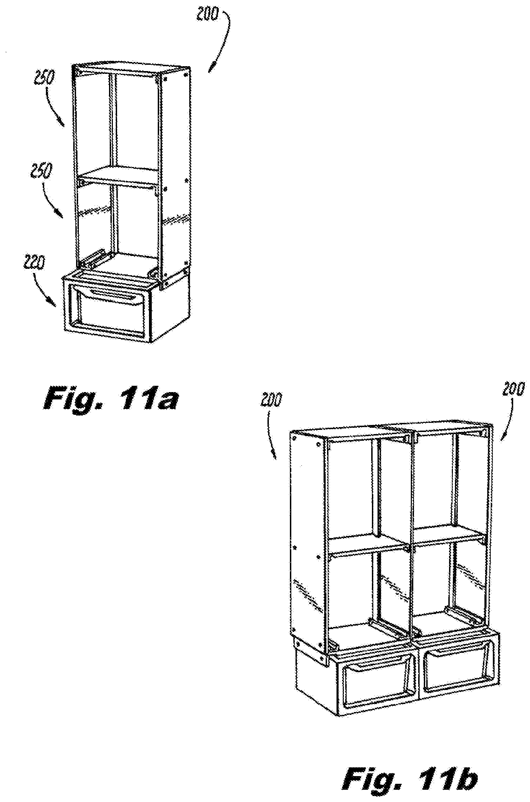

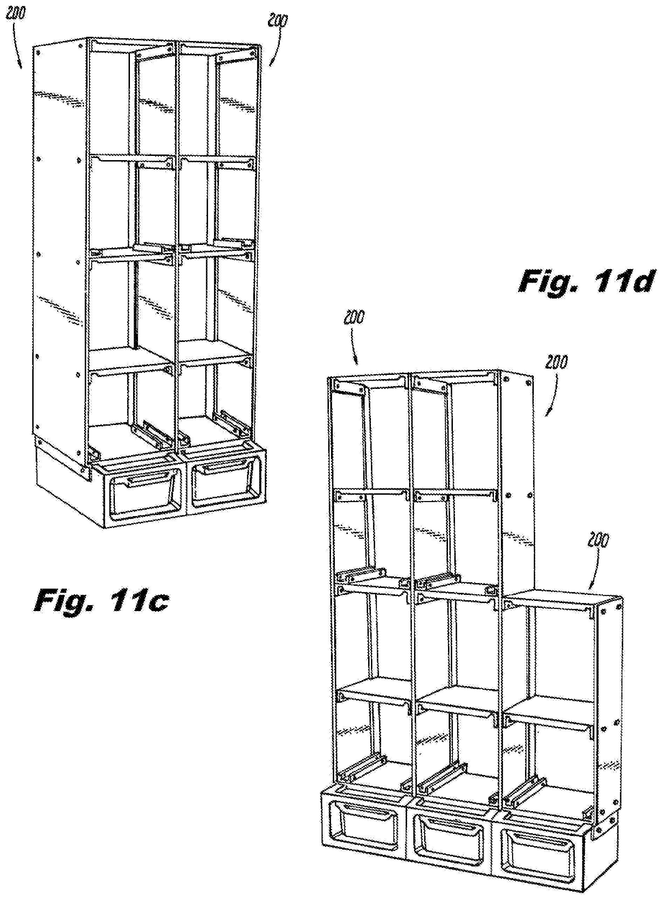

FIG. 11a depicts a front-right perspective view of an assembled shelving module unit and drain pan.
FIG. 11b depicts a front-left perspective view of an assembly of two laterally installed shelving module units and drain pans.
FIG. 11c depicts a front-left perspective view of an assembly of shelving module units with drain pans.
FIG. lid depicts a front-right perspective view of an assembly of shelving module units with drain pans.

### DETAILED DESCRIPTION OF THE PREFERRED EMBODIMENTS

The present application describes various embodiments of a lubricant bay box dispensing system.

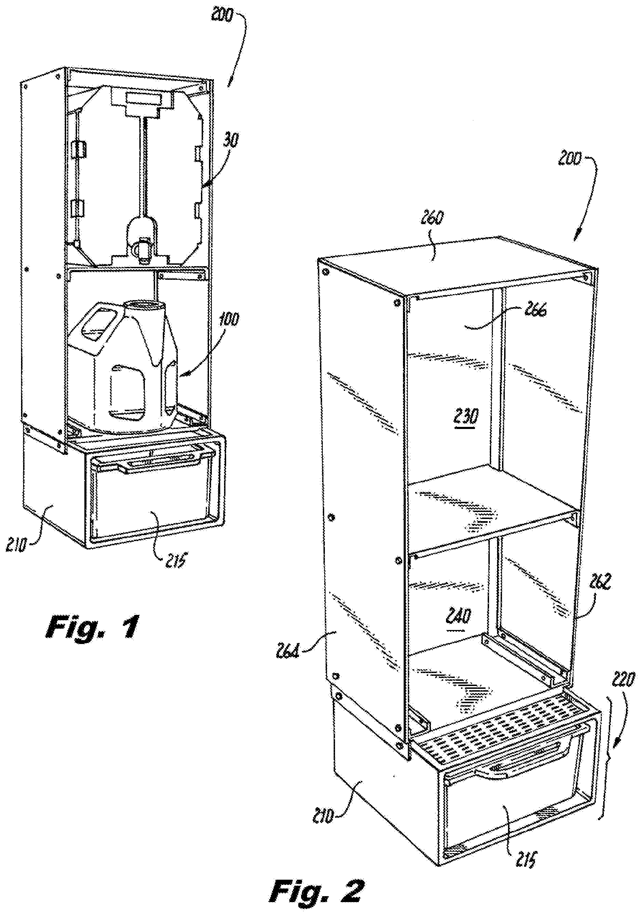

As depicted in Fig. 1, lubricant 1 is stored within and ultimately dispensed from a sealed flexible reservoir bag 10. The reservoir bag 10 preferably possesses a reservoir bag base 14, proximal face 15, distal face 16, top 17, first side face 18, and second side face 19. The reservoir bag 10 is preferably made from a high density polymer to form a puncture resistant carrier and possesses dispenser 12, e.g. a spigot assembly 12 or functionally similar means to control the dispensing of lubricant from the reservoir bag base 14 via a gravity feed.

The lubricant filled reservoir bag 10 is contained within a bag housing 20 as depicted in Fig. 2. The combination of the assembled reservoir bag 10 and reservoir bag housing 20 is referred to herein as the bag box, i.e. as lubricant storage container 30.

A bag housing 20 is preferably constructed of cardboard and is sufficiently rigid to contain and protect a lubricant filled reservoir bag 10 housed therein. The assembled bag housing 20 is a preferably a box having a proximal wall 22, a distal wall 24, a first lateral wall 26, a second lateral wall 28, a top wall, a base wall 32, a first top chamfered wall 34, a second top chamfered wall 36, a first base chamfered wall 38, and a second base chamfered wall 40. A spigot port 42 at the base of the proximal wall 22 allows the bag's integrated spigot 12 to be pulled through the proximal wall 22 so as to allow the spigot 12 reside outside of the reservoir bag housing 20 while the reservoir bag 10 is housed within the bag housing 20. The chamfered walls 34, 36, 38, 40 add structural strength to the bag housing 20. Moreover, the first and second base chamfered walls 38,40 decrease the available space for the lubricant filled bag at the bottom of the bag housing 20, thereby increasing pressure and improving flow through the spigot 12.

The bag housing 20 preferably has four proximal flaps 50 that fold together to create the proximal wall 22, i.e. a proximal base flap 52, a proximal top flap 54, a first proximal lateral flap 56, and a second proximal lateral flap 58. The proximal base flap 52 possesses a spigot flap orifice 55 through which a spigot 12 may pass. Ideally, the bag housing 20 possesses a vertical bag sight port 25 to permit the volume of lubricant 1 remaining in the bag to be readily ascertained. The sight port 25 is created from a gap left between the proximal flaps 50 when they are folded together.

An ergonomic lubricant dispensing jug 100 is utilized to receive the lubricant 1 from the bag box 30 and to transport it to a lubrication point, e.g. an engine being serviced. The lubricant dispensing jug 100 preferably possesses a top 110, base 112, proximal side 114, distal side 116, a first lateral side 117, and a second lateral side 118. A lubricant fill inlet 120 is sited at the top of the jug 100 along its proximal side 114. The lubricant fill inlet 120 is used to fill the lubricant dispensing jug, i.e. jug, with a lubricant 1. The lubricant 1 is intended to flow into the lubricant fill inlet 120 when the jug 100 is placed below the bag box 30 and the spigot 12 is vertically aligned with the lubricant fill inlet 120.
The jug 100 possesses a first jug handle 140 along its proximal side 114 in the jug's proximal-distal plane. In an alternative embodiment, a second jug handle 150 runs along the top of the jug 100 parallel to the horizontal axis extending from the distal side 116 to the proximal side 114 and in line with a plane extending from the jug top 110 to the jug base 112. The first jug handle 140 is ergonomically positioned substantially in the center of the distal side 116 of the jug and above the jug base 112 so as to typically keep the center of gravity of the lubricant filled jug 100 below the user's hand. The jug 100 further possesses a removable funnel 180 having a funnel inlet 184 that possesses a larger diameter than the lubricant fill inlet 120, and a funnel outlet 186 having a smaller diameter than both the lubricant fill inlet 120 and the funnel inlet 184. The funnel 180 is typically stored within the jug 100 with the funnel outlet 186 housed within the jug 100 by inserting the funnel outlet into the jug 100 through the lubricant fill inlet 120. The passage of the funnel inlet 184 into the jug 100 is stopped by the neck of the lubricant fill inlet 120 as it is of a smaller diameter than the funnel inlet 184. The jug 100 is preferably emptied through the jug outlet 130.

A modular rack 200 is provided for the storage of a bag housing 30, a dispensing jug 100, and a spill containment module 220. The modular shelving rack 200 is constructed from a rigid material, preferably a metal or alloy. Each shelving module 250 of the modular rack 200 is a substantially hollow rectangular boxed frame having a top module wall 260, a base module wall 261 a first lateral module wall 262, a second lateral module wall 264, and a distal module wall 266 affixed by wall fastening means 222. The top module wall 260 possesses an outer top module wall face 270 and an inner top module wall face 272. The base module wall 261 possesses an base wall inner surface 273 and a base wall outer surface 275. Each lateral wall 262, 264 possesses a lateral wall inner surface 274 and a lateral wall outer surface 276. The distal wall 266 possesses a distal wall inner surface 278 and a distal wall outer surface 280. A module shelf 290 having a module shelf top surface 292 and a module shelf bottom surface 293 is affixed between the lateral walls 262, 264 to segregate each module into a top storage compartment 230 and a bottom storage compartment 240. The top storage compartment 230 is used to store a bag box 30. The bottom storage compartment 240 is used to store a jug 100. The shelving module 250 preferably lacks a connecting wall across the proximal side of the frame 255.

The top storage compartment 230 is of sufficient width to permit the insertion of a bag box 30, i.e. lubricant storage container 30, and not wide enough to permit the bag box 30 to move laterally enough to cause a misalignment between the bag box spigot 12 and the lubricant inlet port 120. The bottom storage compartment 240, in a further preferred embodiment, is the same width as the top storage compartment 230 but wider than the jug 100, therefore requiring the base module wall 261 to utilize a means to laterally align the jug 300, i.e. lubricant dispensing jug guide 300, beneath the bag box 30 by guiding the lateral sides of the jug 100 into the proper position. Ideally, the jug 100 possesses a depth from proximal to distal ends so as to allow the lubricant inlet port 120 to be correctly aligned with the spigot 12 along a pour proximal-distal axis when the jug 100 is fulling inserted into the bottom storage compartment 240. A screened drain pan module 210 with removable drain pan 215 is positioned beneath the module base wall 261 and an inserted jug so as to catch spills.

The shelving modules 250 may be coupled together in a vertically stacked manner and affixed to each other by a shelving module fastening means 252 (e.g. bolts, rivets, etc.) which functions to secure the top module wall 260 to the base module wall 261 of two shelving modules 250 stacked atop each other. Likewise, shelving modules 250 may be affixed horizontally across their lateral walls 262, 264. In a still further embodiment, the fastening means 252 may be removed to permit disassembly. The coupling of modules 250 permits the construction of a modular rack 200 that is configurable vertically and horizontally as needed to meet space requirements and restraints.

The top storage compartment 230 creates a housing which permits the shelving of a bag box 30 within the space defined by the confines of the inner surfaces 274, 276 of the lateral walls 262, 264 of both modules, the inferior surface 272 of the top module wall 260 of and the superior surface 292 of the module shelf 290.

The shelving modules 250 may be vertically coupled so that the outer surface 275 of the base module wall 261 of a top mounted module 250 is adjacent to the outer surface 270 of the top module wall 260 of a bottom mounted module 250. Likewise, shelving modules 250 may be horizontally coupled by affixing the outer surfaces 276 of the lateral walls 262, 264.

The bag box 30 is arranged above a jug 100 so that the bag box 30 may be drained into the dispensing jug 100 shelved immediately below the bag box 30. When the bag box 30 is placed into the top storage compartment 230 and seated against the inner surface 278 of the distal module wall 266 and the jug 100 is also seated against the inner surface 278 of the distal module wall 266, the bag box spigot 120 is aligned directly above and in close proximity to the lubricant fill inlet 120 on the jug 100.

While the system and processes of the present application have been particularly shown and described with reference to specific embodiments thereof, the scope of the application should be determined with reference to the appended claims.

## Claims

1. A modular lubricant storage and dispensing system comprising a lubricant dispensing jug (100) having a lubricant inlet port (120) and a lubricant outlet port (130), and at least one handle (150), a lubricant storage container (30) having a dispensing means (12); and a shelving module (200) for housing said lubricant dispensing jug (100) and said lubricant storage container (30), said shelving module (200) having a module distal wall (266), a first module lateral wall (262), a second module lateral wall (264), a module top wall (260), a module base wall (261), and a module shelf (290), said module shelf (290) dividing said shelving module (200) into a top storage compartment (230) into which the lubricant storage container (30) can be inserted and a bottom storage compartment (240) into which the lubricant dispensing jug (100) can be inserted, wherein the modular lubricant storage and dispensing system further comprises a screened drain pan module (210) with removable drain pan (215) which is positioned beneath said module base wall (261), said lubricant dispensing jug (100) and said lubricant storage container (30) being housed in said shelving module (200) above said screened drain pan module (210), **characterized in that** said bottom storage compartment (240) comprises alignment means (300) to laterally align the lubricant dispensing jug (100) beneath the lubricant storage container (30) by guiding lateral sides of the jug (100) into a position in which the lubricant inlet port (120) is aligned with said dispensing means (12), so as to allow lubricant to flow from said dispensing means (12) into said lubricant inlet port (120) of said lubricant dispensing jug 100).

2. The modular lubricant storage and dispensing system of claim 1, wherein said lubricant dispensing means (12) is an integrated spigot located at the base of said lubricant storage container (30).

3. The modular lubricant storage and dispensing system of claim 1, wherein said at least one handle's interior is hollow and in connection with a hollow space of said lubrication dispensing jug (100).

4. The modular lubricant storage and dispensing system of claim 1, wherein said at least one handle (150) is configured to permit the user's hand to pass through a hand orifice passing through a body of said lubricant dispensing jug (100).

5. The modular lubricant storage and dispensing system of claim 1, wherein said lubricant dispensing jug (100) is housed within said bottom storage compartment (240) and said lubricant inlet port (120) of said lubricant storage jug (100) is aligned with said spigot (12) below said dispensing means (12) of said lubricant storage container (30) when said lubricant dispensing jug (100) is fully inserted into said bottom storage compartment (240).

6. The modular lubricant storage and dispensing system of claim 1, wherein said alignment means (300) comprises at least one lubricant dispensing jug guide, said lubricant dispensing jug (100) being aligned within said bottom storage compartment (240) by said at least one lubricant dispensing jug guide.

7. The modular lubricant storage and dispensing system of claim 6, wherein said at least one lubricant dispensing jug guide is affixed to an inner surface (273) of said module base wall (261).

8. The modular lubricant storage and dispensing system of claim 3, wherein said lubricant storage container (30) has a smaller width than the width of said top storage compartment so as to permit said lubricant storage container's insertion into said top storage compartment but also having sufficient width as to inhibit lateral movement of said lubricant storage container within said top storage compartment so that said lubricant storage container dispenser is aligned above said lubricant inlet port of said lubricant dispensing jug.

9. The modular lubricant storage and dispensing system of claim 3, wherein said top storage compartment (230) possesses lubricant storage container guides to align said lubricant storage container (30) within said top storage compartment (230) and to inhibit lateral movement of said lubricant storage container (30) within said top storage compartment.

10. The modular lubricant storage and dispensing system of claim 1, wherein said drain pan module (210) extends proximally beneath said lubricant dispensing jug (100) and beyond said module base wall (261).

11. The modular lubricant storage and dispensing system of claim 1, comprising a plurality of shelving modules (200), wherein one shelving module (200) of said plurality is affixed to at least one other shelving module by a shelving module fastening means.

## Patentansprüche

1. Modulares Schmiermittelvorrats- und -ausgabesystem, umfassend: einen Schmiermittelausgabekanister (100) mit einer Schmiermitteleinlassöffnung (120) und einer Schmiermittelauslassöffnung (130) und zumindest einen Griff (150), einen Schmiermittelvorratsbehälter (30) mit einer Ausgabeeinrichtung (12); und ein Regalmodul (200) zum Aufnehmen des Schmiermittelausgabekanisters (100) und des Schmiermittelvorratsbehälters (30), wobei das Regalmodul (200) eine distale Modulwand (266), eine erste laterale Modulwand (262), eine zweite laterale Modulwand (264), eine Moduloberwand (260), eine Modulbodenwand (261) und eine Modulablage (290) aufweist, wobei die Modulablage (290) das Regalmodul (200) in ein oberes Ablagefach (230), in das der Schmiermittelvorratsbehälter (30) eingesetzt werden kann, und ein Boden-Ablagefach (240) unterteilt, in das der Schmiermittelausgabekanister (100) eingesetzt werden kann, wobei das modulare Schmiermittelvorrats- und -ausgabesystem ferner ein abgeschirmtes Ablaufwannenmodul (210) mit abnehmbarer Ablaufwanne (215) aufweist, die unter der Modulbodenwand (261) positioniert ist, wobei der Schmiermittelausgabekanister (100) und der Schmiermittelvorratsbehälter (30) im Regalmodul (200) oberhalb des abgeschirmten Ablaufwannenmoduls (210) aufgenommen sind, **dadurch gekennzeichnet, dass** das Boden-Ablagefach (240) eine Ausrichteinrichtung (300) zum seitlichen Ausrichten des Schmiermittelausgabekanisters (100) unter dem Schmiermittelvorratsbehälter (30) durch seitliches Führen von lateralen Seiten des Kanisters (100) in eine Position, in der die Schmiermitteleinlassöffnung (120) mit der Ausgabeeinrichtung (12) ausgerichtet ist, aufweist, um dem Schmiermittel zu ermöglichen, aus der Ausgabeeinrichtung (12) in die Schmiermitteleinlassöffnung (120) des Schmiermittelausgabekanisters (100) zu fließen.

2. Modulares Schmiermittelvorrats- und -ausgabesystem nach Anspruch 1, wobei die Schmiermittelausgabeeinrichtung (12) ein integrierter Zapfen ist, der an der Basis des Schmiermittelvorratsbehälters (30) angeordnet ist.

3. Modulares Schmiermittelvorrats- und -ausgabesystem nach Anspruch 1, wobei zumindest das Innere eines Griffs hohl ist und in Verbindung mit einem Hohlraum des Schmiermittelausgabekanisters (100) steht.

4. Modulares Schmiermittelvorrats- und -ausgabesystem nach Anspruch 1, wobei zumindest der Griff (150) eingerichtet ist, dass die Hand des Benutzers durch eine Handöffnung hindurchgehen kann, die durch einen Körper des Schmiermittelausgabekanisters (100) hindurchgeht.

5. Modulares Schmiermittelvorrats- und -ausgabesystem nach Anspruch 1, wobei der Schmiermittelausgabekanister (100) im Boden-Ablagefach (240) aufgenommen ist und die Schmiermitteleinlassöffnung (120) des Schmiermittelvorratskanisters (100) mit dem Zapfen (12) unter der Ausgabeeinrichtung (12) des Schmiermittelvorratsbehälters (30) ausgerichtet ist, wenn der Schmiermittelausgabekanister (100) vollständig in das Boden-Ablagefach (240) eingesetzt ist.

6. Modulares Schmiermittelvorrats- und -ausgabesystem nach Anspruch 1, wobei die Ausrichteinrichtung (300) zumindest eine Schmiermittelausgabekanisterführung aufweist, wobei der Schmiermittelausgabekanister (100) im Boden-Ablagefach (240) durch die zumindest eine Schmiermittelausgabekanisterführung ausgerichtet ist.

7. Modulares Schmiermittelvorrats- und -ausgabesystem nach Anspruch 6, wobei zumindest die Schmiermittelausgabekanisterführung an einer Innenfläche (273) der Modulbodenwand (261) befestigt ist.

8. Modulares Schmiermittelvorrats- und -ausgabesystem nach Anspruch 3, wobei der Schmiermittelvorratsbehälter (30) eine geringere Breite als die Breite des oberen Ablagefachs aufweist, um so das Einsetzen des Schmiermittelvorratsbehälters in das obere Ablagefach zu ermöglichen, aber auch eine ausreichende Breite aufweist, um eine seitliche Bewegung des Schmiermittelvorratsbehälters im oberen Ablagefach zu verhindern, so dass die Schmiermittelvorratsbehälter-Ausgabeeinrichtung über der Schmiermitteleinlassöffnung des Schmiermittelausgabekanisters ausgerichtet ist.

9. Modulares Schmiermittelvorrats- und -ausgabesystem nach Anspruch 3, wobei das obere Ablagefach (230) Schmiermittelvorratsbehälterführungen besitzt, um den Schmiermittelvorratsbehälter (30) im oberen Ablagefach (230) auszurichten und um eine seitliche Bewegung des Schmiermittelvorratsbehälters (30) innerhalb des oberen Ablagefachs (230) zu verhindern.

10. Modulares Schmiermittelvorrats- und -ausgabesystem nach Anspruch 1, wobei das Ablaufwannenmodul (210) sich proximal unter dem Schmiermittelausgabekanister (100) und jenseits der Modulbodenwand (261) erstreckt.

11. Modulares Schmiermittelvorrats- und -ausgabesystem nach Anspruch 1, das eine Mehrzahl von Regalmodulen (200) aufweist, wobei ein Regalmodul (200) von der Mehrzahl an zumindest einem anderen Regalmodul durch eine Regalmodul-Befestigungseinrichtung befestigt ist.

## Revendications

1. Système de stockage et de distribution de lubrifiant modulaire comprenant un bidon de distribution de lubrifiant (100) ayant un trou d'admission de lubrifiant (120) et un trou d'évacuation de lubrifiant (130), et au moins une poignée (150), un récipient de stockage de lubrifiant (30) ayant un moyen de distribution (12) ; et un module de rayonnage (200) permettant de loger ledit bidon de distribution de lubrifiant (100) et ledit récipient de stockage de lubrifiant (30), ledit module de rayonnage (200) ayant une paroi distale de module (266), une première paroi latérale de module (262), une seconde paroi latérale de module (264), une paroi supérieure de module (260), une paroi de base de module (261), et un rayon de module (290), ledit rayon de module (290) divisant ledit module de rayonnage (200) en un compartiment de stockage supérieur (230) dans lequel le récipient de stockage de lubrifiant (30) peut être inséré et un compartiment de stockage inférieur (240) dans lequel le bidon de distribution de lubrifiant (100) peut être inséré, dans lequel le système de stockage et de distribution de lubrifiant modulaire comprend en outre un module à bac de récupération filtré (210) avec un bac de récupération amovible (215) qui est positionné sous ladite paroi de base de module (261), ledit bidon de distribution de lubrifiant (100) et ledit récipient de stockage de lubrifiant (30) étant logés dans ledit module de rayonnage (200) au-dessus dudit module à bac de récupération filtré (210), **caractérisé en ce que** ledit compartiment de stockage inférieur (240) comprend des moyens d'alignement (300) pour aligner latéralement le bidon de distribution de lubrifiant (100) sous le récipient de stockage de lubrifiant (30) en guidant des côtés latéraux du bidon (100) dans une position dans laquelle le trou d'admission de lubrifiant (120) est aligné sur ledit moyen de distribution (12), de façon à permettre à un lubrifiant de couler à partir dudit moyen de distribution (12) dans ledit trou d'admission de lubrifiant (120) dudit bidon de distribution de lubrifiant (100).

2. Système de stockage et de distribution de lubrifiant modulaire selon la revendication 1, dans lequel ledit moyen de distribution de lubrifiant (12) est un robinet intégré situé au niveau de la base dudit récipient de stockage de lubrifiant (30).

3. Système de stockage et de distribution de lubrifiant modulaire selon la revendication 1, dans lequel un intérieur de ladite au moins une poignée est creux et en liaison avec un espace creux dudit bidon de distribution de lubrifiant (100).

4. Système de stockage et de distribution de lubrifiant modulaire selon la revendication 1, dans lequel ladite au moins une poignée (150) est configurée pour permettre à une main de l'utilisateur de passer à travers un orifice pour main passant à travers un corps dudit bidon de distribution de lubrifiant (100).

5. Système de stockage et de distribution de lubrifiant modulaire selon la revendication 1, dans lequel ledit bidon de distribution de lubrifiant (100) est logé à l'intérieur dudit compartiment de stockage inférieur (240) et ledit trou d'admission de lubrifiant (120) dudit bidon de stockage de lubrifiant (100) est aligné sur ledit robinet (12) en dessous dudit moyen de distribution (12) dudit récipient de stockage de lubrifiant (30) lorsque ledit bidon de distribution de lubrifiant (100) est entièrement inséré dans ledit compartiment de stockage inférieur (240).

6. Système de stockage et de distribution de lubrifiant modulaire selon la revendication 1, dans lequel ledit moyen d'alignement (300) comprend au moins un guide de bidon de distribution de lubrifiant, ledit bidon de distribution de lubrifiant (100) étant aligné à l'intérieur dudit compartiment de stockage inférieur (240) par ledit au moins un guide de bidon de distribution de lubrifiant.

7. Système de stockage et de distribution de lubrifiant modulaire selon la revendication 6, dans lequel ledit au moins un guide de bidon de distribution de lubrifiant est attaché à une surface intérieure (273) de ladite paroi de base de module (261).

8. Système de stockage et de distribution de lubrifiant modulaire selon la revendication 3, dans lequel ledit récipient de stockage de lubrifiant (30) a une plus petite largeur que la largeur dudit compartiment de stockage supérieur de façon à permettre une insertion dudit récipient de stockage de lubrifiant dans ledit compartiment de stockage supérieur mais a aussi une largeur suffisante pour empêcher un déplacement latéral dudit récipient de stockage de lubrifiant à l'intérieur dudit compartiment de stockage supérieur de façon à ce que ledit distributeur à récipient de stockage de lubrifiant soit aligné au-dessus dudit trou d'admission de lubrifiant dudit bidon de distribution de lubrifiant.

9. Système de stockage et de distribution de lubrifiant modulaire selon la revendication 3, dans lequel ledit compartiment de stockage supérieur (230) possède des guides de récipient de stockage de lubrifiant pour aligner ledit récipient de stockage de lubrifiant (30) à l'intérieur dudit compartiment de stockage supérieur (230) et pour empêcher un déplacement latéral dudit récipient de stockage de lubrifiant (30) à l'intérieur dudit compartiment de stockage supérieur.

10. Système de stockage et de distribution de lubrifiant modulaire selon la revendication 1, dans lequel ledit module à bac de récupération (210) s'étend de manière proximale sous ledit bidon de distribution de lubrifiant (100) et au-delà de ladite paroi de base de module (261).

11. Système de stockage et de distribution de lubrifiant modulaire selon la revendication 1, comprenant une pluralité de modules de rayonnage (200), dans lequel un module de rayonnage (200) de ladite pluralité est attaché à au moins un autre module de rayonnage par un moyen de fixation de module de rayonnage.
